# EUROPEAN PATENT APPLICATION

(11) **EP 0 642 049 A1**
(43) Date of publication of application: **08.03.1995**
(21) Application number: 94909310.8
(22) Date of filing: 14.03.1994
(51) Int. Cl.: G02F 1/1333, G02F 1/1345, G02F 1/1335

(54) **LIQUID CRYSTAL DISPLAY, AND ELECTRONIC DEVICE ON WHICH THE LIQUID CRYSTAL DISPLAY IS MOUNTED**

(30) Priority: 15.03.1993 JP 54064/93
(71) Applicant: SEIKO EPSON CORPORATION, Shinjuku-ku Tokyo 163 (JP)
(72) Inventor: ONO, Yoichi, Nagano-ken 392 (JP); TSUKAHARA, Akira, Nagano-ken 392 (JP); HINATA, Syoji, Nagano-ken 392 (JP)
(74) Representative: Hoffmann, Eckart, Dipl.-Ing.
(86) International application number: JP9400401
(87) International publication number: WO9422044

(57) **Abstract**

A pair of polarization plates (9 and 10) are arranged outside a liquid crystal display which uses a flexible substrate such as a plastic film. An edge of at least one of the plates is extended to the area where the electrode terminal terminal part is provided on the substrate (2). By enhancing the mechanical strength of the part (7), the terminal electrodes do not crack by the mechanical stress in fabricating the liquid crystal display and in incorporating the display into an electronic device. In this way, disconnection hardly occurs, making it possible to provide a highly reliable liquid crystal display.

## Description

### FIELD OF THE INVENTION

The present invention relates to a liquid crystal display which uses flexible substrates, as well as to an electronic device that includes said liquid crystal display.

### BACKGROUND OF THE INVENTION

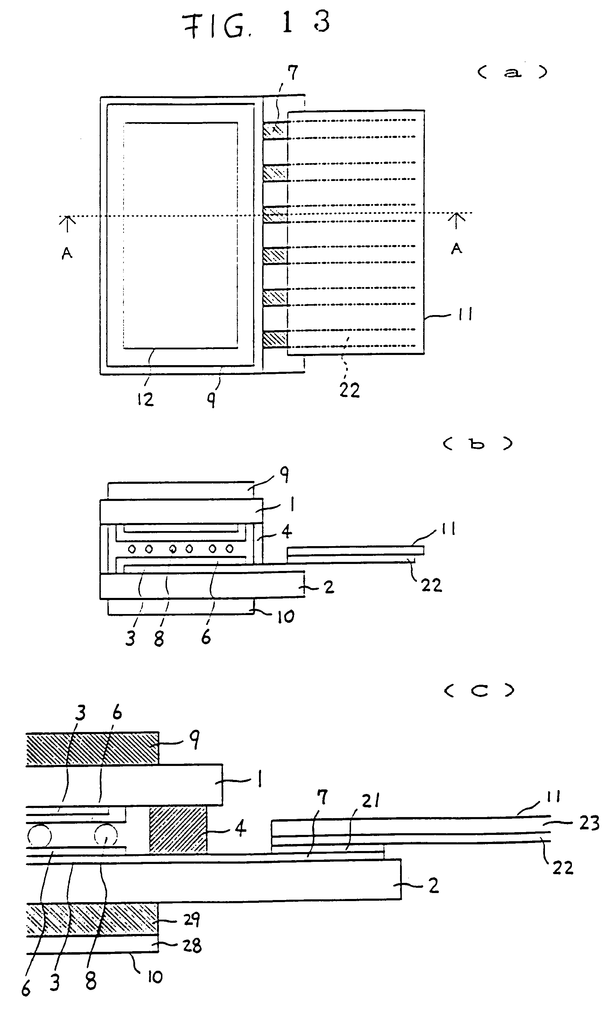

The structure of conventional liquid crystal displays that use flexible substrates such as plastic films will be explained with reference to FIG. 13.

FIG. 13 is a diagram showing the use, in a liquid crystal display, of a heat seal connector as an electrical connector means for making an electrical connection with an external circuit.

FIG. 13(a) is a top plan view when looking from the front side of the display of the liquid crystal display. FIG. 13(b) is a cross-sectional view taken from the A-A line of FIG. 13(a). FIG. 13(c) is a cross-sectional view of the requisite portions of FIG. 13(b). In these figures, an upper polarizer 9 and a lower polarizer with reflector plate 10 are generally equal to or are greater than the possible display range 12 of the liquid crystal display. Consequently, upper polarizer 9 and lower polarizer with reflector plate 10 are nearly of the same size as the smaller sized substrate of the pair of upper substrate 1 and lower substrate 2 (upper substrate 1 in the case of FIG. 13) and arranged in nearly the same position. This point is already known in the art. For example, see JP-A- 3-96921 (1991).

However, because of an electrode terminal 7 being formed on lower substrate 2 of the conventional liquid crystal display which is constructed of a pair of flexible plastic films (for example, thickness of approximately 100 µm), when external forces arise during the manufacturing process or when the display is incorporated into an electronic device, electrode terminal 7 can easily bend, cracks can appear in the transparent electrode of electrode terminal 7, and disconnections or wire breakage occur. Also, if the exposed transparent electrode of electrode terminal 7 is touched, flaws can occur in the transparent electrode resulting in disconnections. Further, in the case when pressure is exerted on electrode terminal 7 during the incorporation into an electronic device, cracks and disconnections may occur when the edge of upper substrate 1, which faces lower substrate 2, where electrode terminal 7 is formed, is forced against the transparent electrode of electrode terminal 7. Consequently, a liquid crystal display using flexible substrates such as plastic films must be handled extremely carefully. In view of this, large problems are caused in the production process such as an increased number of process steps and a decrease in yield. These are problems that don't exist in liquid crystal displays that use glass substrates.

The present invention is created in view of these problems in conventional technology. It is an object of the present invention to provide for a highly reliable liquid crystal display where disconnections do not occur in the electrode terminal as well as to provide for an electronic device that incorporates the same.

### DISCLOSURE OF THE INVENTION

The liquid crystal display in accordance with one embodiment of the present invention comprises a liquid crystal sandwiched between a pair of flexible substrates and a pair of polarizers disposed on the outside of said substrates and further comprising the edge of at least one of said polarizers constructed so as to extend up to an electrode terminal area which is used for making connection to an external driving circuit.

The liquid crystal display may further comprise an electrode terminal, and a resin mold formed so that an external circuit connecting means covers said electrically connected edge.

The liquid crystal display may further comprise a reinforcement plate disposed on the outside of said extended polarizer.

The liquid crystal display wherein a respective edge of each of said pair of polarizers is extended to said electrode terminal region may further comprise a resin mold formed in an opening between an electrode terminal and an edge of one of said polarizers.

The liquid crystal display in accordance with another embodiment of the present invention comprises a liquid crystal display having liquid crystal sandwiched between a pair of substrates that comprise a polarizing film enclosed by a high polymer film comprising an electrode terminal for making contact with an external driving circuit, and a reflector plate, said reflector plate arranged on the back face of one of said substrates and extended to the region of said electrode terminal.

An electronic device of the present invention further incorporates the liquid crystal display of claim 1 or 5.

### BRIEF DESCRIPTION OF THE DRAWINGS

- FIG. 1: is a cross-sectional view of a liquid crystal display in accordance with embodiment 1 of the invention.
- FIG. 2: is a cross-sectional view of a liquid crystal display in accordance with embodiment 2 of the invention.
- FIG. 3: is a cross-sectional view of a liquid crystal display in accordance with embodiment 3 of the invention.
- FIG. 4: is a cross-sectional view of a liquid crystal display in accordance with embodiment 4 of the invention.
- FIG. 5: is a cross-sectional view of a liquid crystal display in accordance with embodiment 5 of the invention.
- FIG. 6: is a cross-sectional view of a liquid crystal display in accordance with embodiment 6 of the invention.
- FIG. 7: is a cross-sectional view of a liquid crystal display in accordance with embodiment 7 of the invention.
- FIG. 8: is a cross-sectional view of a liquid crystal display in accordance with embodiment 8 of the invention.
- FIG. 9: is a cross-sectional view of a liquid crystal display comprising a phase difference plate arranged between a liquid crystal display and a polarizer.
- FIG. 10: is a diagram of a liquid crystal display in accordance with the subject invention incorporated into a card-type electronic table-top calculator.
- FIG. 11: shows the method for conducting the bending test of the liquid crystal display.
- FIG. 12: shows the method for conducting the pressure test of the liquid crystal display.
- FIG. 13: is a diagram showing the structure of a conventional liquid crystal display.

### BEST MODE FOR IMPLEMENTATION OF THE INVENTION

### Embodiment 1

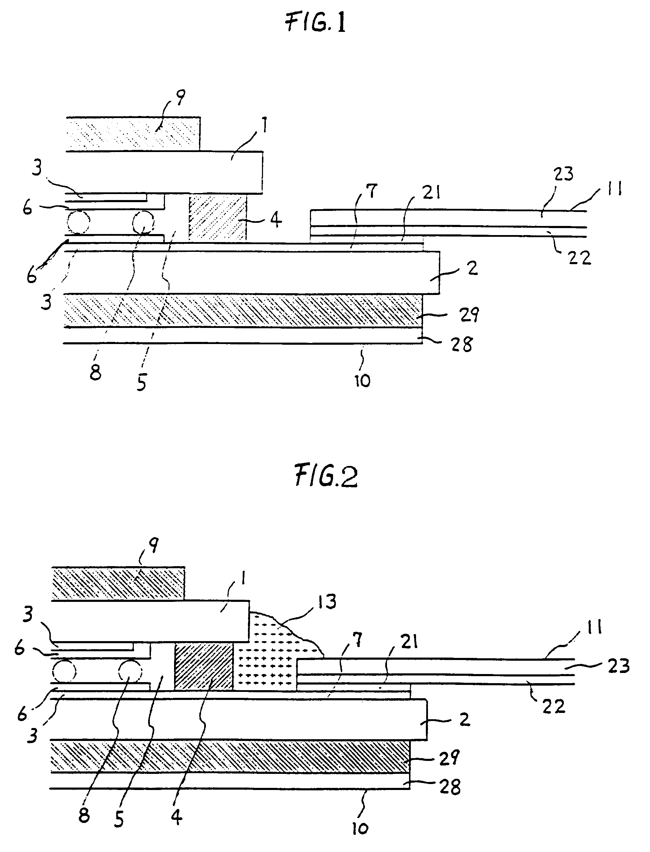

FIG. 1 is a cross-sectional view of a liquid crystal display in accordance with an embodiment of the present invention. The display shown in FIG. 1 is comprised of an upper substrate 1, a lower substrate 2, a transparent electrode 3 which consists of an ITO layer (indium tin oxide), a seal material 4, a liquid crystal 5, an orientation layer 6, an electrode terminal 7, a spacer 8, an upper polarizer 9, and a lower polarizer with reflector plate 10. As shown in the figure, lower polarizer with reflector plate 10 comprises a reflector 28 disposed on a polarizer 29. In this embodiment, a heat seal connector is used as an external circuit connecting means 11. Conductive layer 22 is disposed on one surface of heat seal connector 11. An electrical connection with electrode terminal 7 is made via a conductive ink 21.

The manufacturing process for the liquid crystal display in accordance with this embodiment will now be explained. A polyethersulfone ("PES") film of an approximate thickness of 100 µm is used both for upper substrate 1 and lower substrate 2. A transparent electrode 3 is formed on each substrate by a low-temperature sputtering process and then a prescribed pattern is formed by photolitography. Above this, orientation layer 6, which may be comprised of polyamide, is disposed through offset printing and then baked. Next, after rubbing orientation layers 6 with a cloth in a prescribed direction, seal material 4, an epoxy-type adhesive material with a fixed gap material (for example, PF-80 made by Nippon Electric Glass co., Ltd) is screen printed on one of the substrates. Next, spacers 8 (for example, SP-2085E micropearl made by SEKISUI FINE CHEMICAL CO., LTD) are disseminated by wet process spray on the substrates and the two substrates are set opposing each other. Spacers 8 are distributed with a density of approximately 50 - 400 units/mm, and preferably, 100 - 200 units/mm. Next, liquid crystal 5 is charged by vacuum implantation and sealed by the epoxy-type adhesive. After the liquid crystal cell has been prepared in this manner, upper polarizer 9 (preferably, a thickness of 120 µm) is disposed on the outside of upper substrate 1 of the liquid crystal cell. Lower polarizer with reflector plate 10 (preferably, a thickness of 180 µm), which is extended to the region of electrode terminal 7, is disposed at the outside of lower substrate 2. Further, heat seal connector, as an external circuit connecting means 11, is connected to electrode terminal 7 by thermo-compression bonding. Although, the liquid crystal cell is a twist nematic (TN) type, where the twist angle of the liquid crystal is 90 degrees, a super twist nematic (STN) type, where the twist angle of the liquid crystal is adjusted to be within a range of 180 degrees to 360 degrees, is also possible.

To allow comparison with a conventional device, at the same time with the present invention, a device was formed where a heat seal connector was electrically connected to a liquid crystal display that had a lower polarizer with reflector plate 10 that was of the same size as upper polarizer 9.

The thermo-compression bonding of the heat seal connector may be made before the polarizer is disposed.

The liquid crystal display formed in accordance with the present invention will now be compared with the liquid crystal display of conventional devices through bending and pressure tests.

These tests simulated the external pressure, among others, that is generated in manufacturing processes of the liquid crystal display as well as when the liquid crystal display is incorporated into an electronic device.

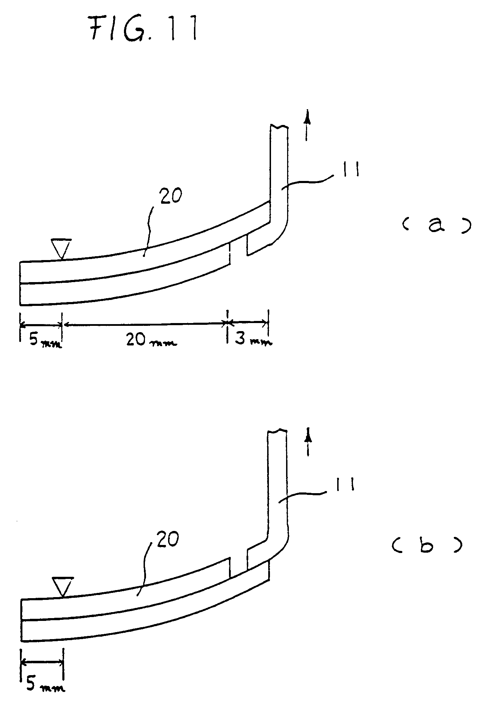

The bending test, as shown in FIG. 11, is a test where the LC display is held down at a position 5 mm from the edge of the LC display opposite to the edge where the electrode terminal 7 is provided and the heat seal connector of external circuit connecting means 11 is pulled to the upper side (both figures are side views during the operation of the tests). 0.49 N increments (4.9 N increments beyond 9.8 N) of pulling force were applied. The pulling force that causes cracks and disconnections to occur was investigated (for convenience in explanation, FIG. 11(a) is called Bending Test A, and FIG. 11(b) is called Bending Test B).

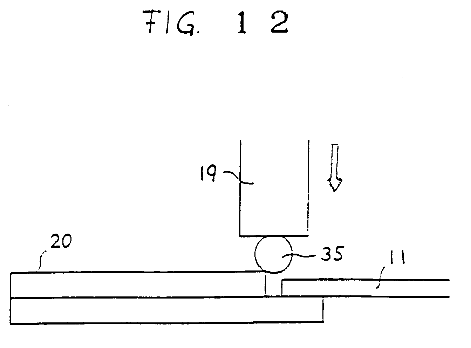

As shown in FIG. 12, the pressure test includes a pressure test means with a hardball 35 of a diameter of 1 cm to put pushing pressure against liquid crystal display 20. The pressure is applied for approximately 3 seconds so that the weight was exerted on the edge of the upper substrate that opposes the lower substrate where the electrode terminal is formed. The weight is increased in 500 g increments to determine where cracks appear and disconnections occur.

As a result of the tests, as shown in Table 1, the ability of the transparent electrode of the electrode terminal to withstand cracking and the difference in the number of disconnections that occurred can be determined. According to these tests the liquid crystal display of the present invention is between two to three times stronger than conventional devices.

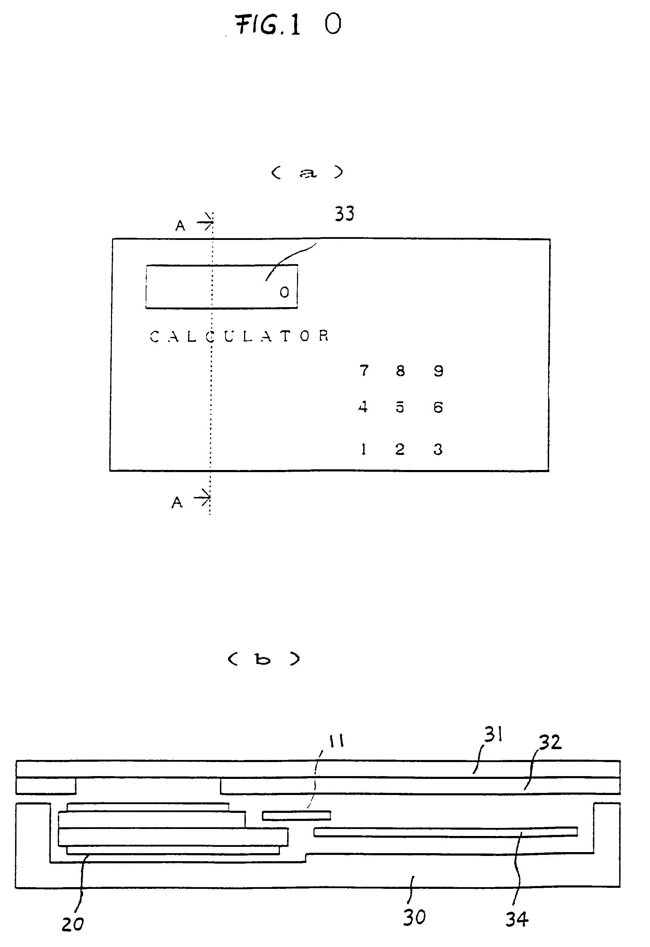

Further, when the liquid crystal display in accordance with the present embodiment is incorporated into a card-type electronic table-top calculator, as shown in FIG. 10, and a test is performed to find the percentage of disconnections occurring, there were two disconnections that occurred out of 5000 in a conventional device. However, in the present invention there were no disconnections out of a possible 5000. Consequently, the shock resistance in a card-type electronic table-top calculator improves as well. The present invention can especially play a role in portable devices.

FIG. 10 will now be explained. FIG. 10(a) is a plan view of the surface of an electronic table-top calculator. FIG. 10(b) is a cross sectional view taken from the line A - A of FIG. 10(a). FIG. 10 comprises a surface portion 33, a decorative panel 31, a keyboard 32 for inputting numbers etc., a circuit board 34, a case 30, an external circuit connecting means 11, and the liquid crystal display 20 of the present embodiment. FIG. 10(b) shows each of these parts broken down into pieces, however, in actuality each of these are compacted within case 30.

When a test of the percentages of disconnections occurring when the liquid crystal display device of the present invention was incorporated into electronic pocket books, pagers, portable telephones, and other electronic devices, the same results as those above were obtained. Thus, it can play an active role in these types of electronic device.

### Embodiment 2

As shown in FIG. 2, resin mold 13 (SE9157 made by Dow Corning Toray Silicone Co. Ltd) is applied by a dispenser and then hardened by heating for one hour at 60° C so as to cover external circuit connecting means 11 and transparent electrode 3 of electrode terminal 7 of a liquid crystal display formed in the same way as embodiment 1. As shown in Table 1, when the same test as that of embodiment 1 was performed, even better results than embodiment 1 were obtained.

### Embodiment 3

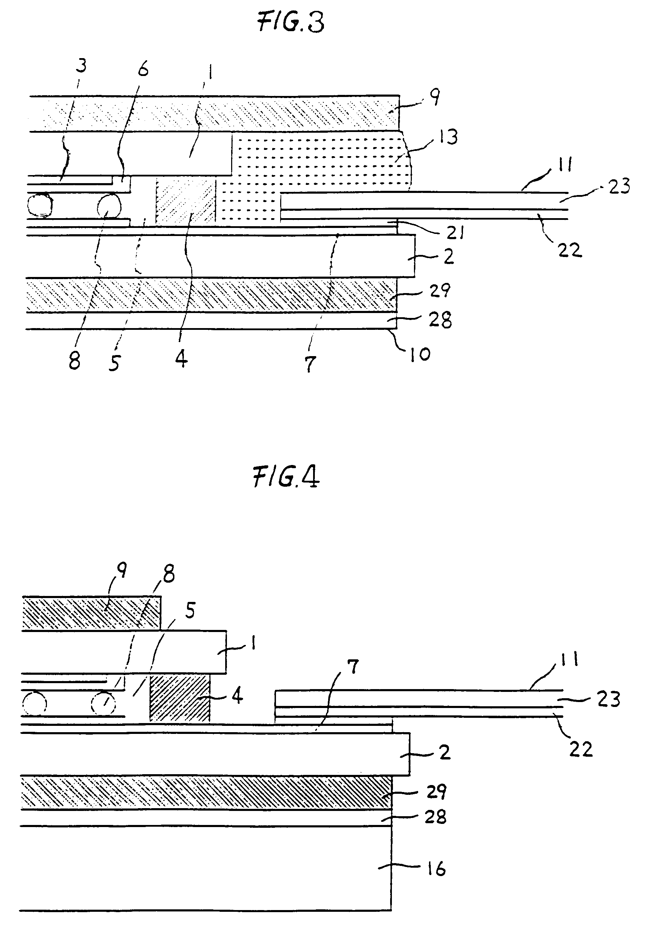

As shown in FIG. 3, a liquid crystal display is constructed with upper polarizer 9 extended on upper substrate 1 so that it covers up to the region of electrode terminal 7, lower polarizer 10 extended on lower substrate 2 so as to cover up to the region of electrode terminal 7, and similar to embodiment 2, resin mold 13 applied between electrode terminal 7 and upper polarizer 9 and then hardened. The rest of the description will be omitted as the other elements of the liquid crystal display, such as the arrangement of the seal material 4 and spacers 8, are similar to embodiment 1.

As shown in Table 1, when the same test as that of embodiment 1 was performed on this liquid crystal display, results were obtained that surpass those of both embodiment 1 and embodiment 2.

### Embodiment 4

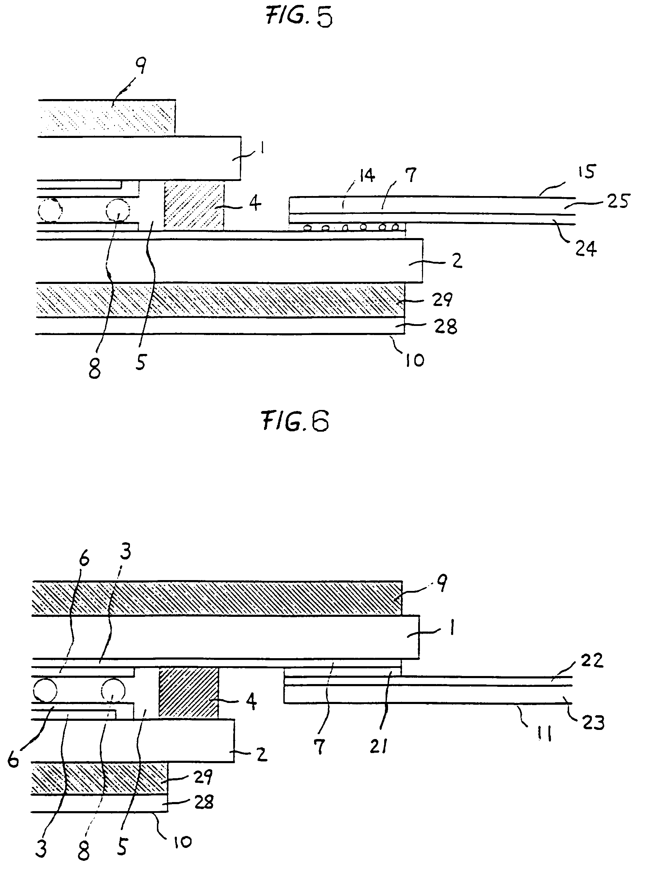

As shown in FIG. 4, an acrylic substrate 16 (approximate thickness of 200 µm) is disposed as a strengthening plate below lower polarizer with reflector of a liquid crystal display formed in accordance with embodiment 1. The results obtained are shown in Table 1. A detailed description will be omitted because, except for acrylic substrate 16, the present embodiment has a structure similar to that of embodiment 1.

### Embodiment 5

As shown in FIG. 5, in the present embodiment, instead of the heat seal connector used as external circuit connecting means 11 in embodiment 1, a flexible circuit board (FPC) 15 is used where rolled copper is patterned in the prescribed configuration on a polyamide film 25. Electrode terminal 7 makes electrical connection with FPC 15 by way of an anisotropic conductive adhesive 14. Anisotropic conductive adhesive 14 is well known in the art. Because conductive particles are mixed in the adhesive, longitudinally it is conductive and laterally it acts as an insulator. In the present invention it is called anisotropic conductive adhesive, but it can also be called an anisotropic conductive film or anisotropic conductive sheet, for instance.

As shown in Table 1, when the same test as that of embodiment 1 was performed, the results were similar to those of embodiment 1.

### Embodiment 6

In embodiment 1, the edge of the observer side film substrate (upper substrate 1) is not extended, while the terminal portion of the film substrate (lower substrate 2) facing it is extended and electrode terminal 7 formed. In the present embodiment, as shown in FIG. 6, a liquid crystal display comprises electrode terminal 7 provided at the observer side film substrate (upper substrate 1). When this liquid crystal display was tested in the same manner as embodiment 1, the results shown in Table 1 were obtained. In the pressure test, a value lower than that of the conventional type display was obtained. However, in bending tests A and B, a strength of approximately ten times greater than that of the conventional type was realized.

### Embodiment 7

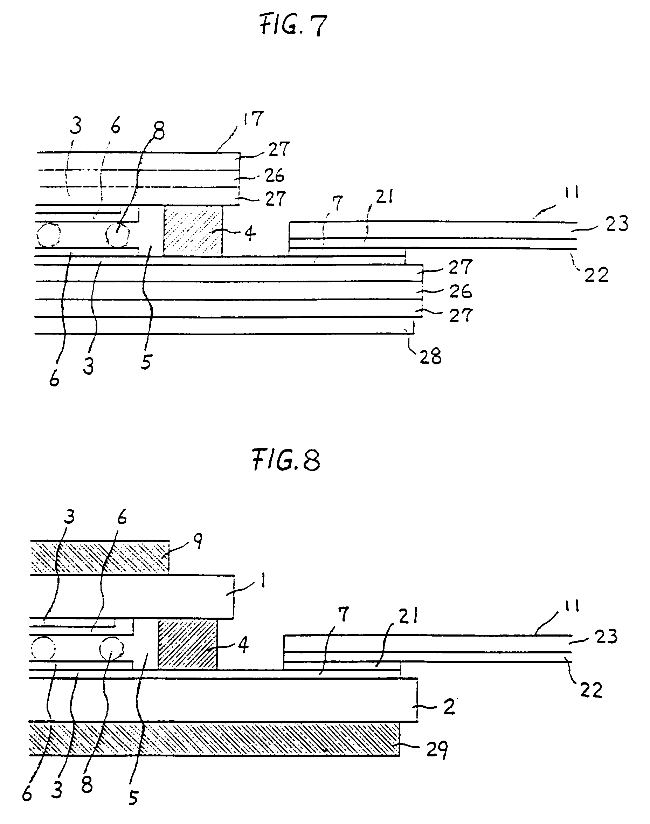

As shown in FIG. 7, instead of upper substrate 1 and lower substrate 2 of embodiment 1, a single-body upper substrate 17 with polarizing film where a polarizing layer 26 (approximate thickness of 25 µm) is sandwiched between a pair of PES films 27 (approximate thickness of 100 µm) and a single-body lower substrate with polarizing film where polarizing film 26 (approximate thickness of 25 µm) is sandwiched between a pair of PES films 27 (approximate thickness of 100 µm) is used. The liquid crystal display is then formed with reflector 28 attached to the lower side. Here, reflector 28 is extended up to the region of the electrode terminal 7. Except for using a single-body substrate with polarizing film, the construction is similar to embodiment 1.

When a test was performed, same as in embodiment 1, on this liquid crystal display, as shown in Table 1, results were obtained that are nearly as good as those of embodiment 4.

In the present embodiment, polarizing film 26 is sandwiched between PES films 27. However, this is not limited to only PES films, as other high polymer films can also be used. Also, the liquid crystal display of the present embodiment, as stated in embodiment 1, can be applied in other electronic devices such as electronic table top calculators, electronic notebooks, pagers, and portable telephones.

### Embodiment 8

Instead of lower polarizer with reflector plate 10 used in embodiment 1, a lower polarizer 29 (approximate thickness of 120 µm) with no reflector is used. Other than that, the structure is similar to that of embodiment 1. The liquid crystal display of embodiment 1 is a so called reflector-type, while the present embodiment is a transparent-type.

When the same test as in embodiment 1 was performed on this liquid crystal display, results similar to those of embodiment 6 were obtained.

It is desirable, as even better results can be achieved, if the extended portion of lower polarizer with reflector plate 10 used in embodiment 1 through embodiment 6 and the extended portion of lower polarizer 29 used in the present embodiment is extended to the end-face of the external circuit connecting means 11 (heat seal connector or FPC) which is connected above electrode terminal 7, or is extended even further so as to overlap more than 1 mm.

### Embodiment 9

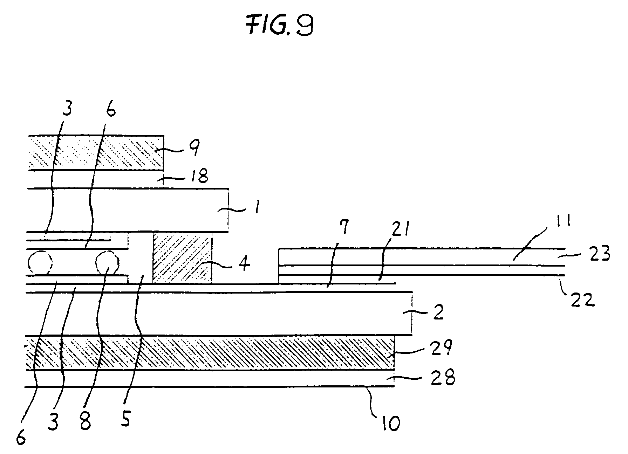

Each of the previously described embodiments use TN type liquid crystal cells. In this embodiment, as shown in FIG. 9, a phase difference plate 18 is arranged between upper substrate 1 and upper polarizer 9. Also, the liquid crystal cell is an STN type. Phase difference plate 18 is a film made of such things as polycarbonate or polyvinyl alcohol. A black and white display can be realized by optically compensating color display which are unique to STN types. Also, when a color filter is formed on this liquid crystal cell, color displays are also possible. In regard to liquid crystal displays such as these, further details are disclosed in JP-A-3-50249 (1991)

In this embodiment, with the STN type liquid crystal cell prepared with the above-described phase difference plate, it further comprises a pair of flexible substrate such as films, and similar to the previous embodiments described above, a polarizer with reflector plate 10 disposed on the lower side of lower substrate 2.

This embodiment has the same effects as embodiment 1.

Although the present embodiment is a reflector-type that uses a polarizer with reflector, the present invention is still effective even if a transparent-type that uses a polarizer without a reflector is used.

### EFFECTS OF THE INVENTION

In accordance with the present invention, and as discussed above, by extending at least one of the upper and lower polarizers to the electrode terminal in a liquid crystal display that employs flexible substrates such as plastic films, the mechanical strength of the electrode terminal can be increased, the danger of terminal electrode cracks caused by mechanical stress that occurs during the manufacturing process of the liquid crystal display or its incorporation into electronic devices, can be decreased and further, a liquid crystal display with a decreased likelihood of disconnections and high reliability can be realized.

**Table 1**

| | Bending Test A | Bending Test B | Pressure Test |
|---|---|---|---|
| Embodiment 1 | Disconnection at 6.86 N | Disconnection at 5.88 N | Disconnection at 19.6 N |
| Embodiment 2 | Disconnection at 8.82 N | Disconnection at 8.82 N | Disconnection at 49 N |
| Embodiment 3 | Disconnection at 19.6 N | Disconnection at 19.6 N | OK at 980 N |
| Embodiment 4 | Disconnection at 39.2 N | Disconnection at 39.2 N | OK at 980 N |
| Embodiment 6 | Disconnection at 4.9 N | Disconnection at 5.88 N | Disconnection at 19.6 N |
| Embodiment 7 | Disconnection at 29.4 N | Disconnection at 29.4 N | OK at 980 N |
| Conventional type | Disconnection at 2.45 N | Disconnection at 1.96 N | Disconnection at 147 N |

## Claims

1. A liquid crystal display having liquid crystal sandwiched between a pair of flexible substrates and a pair of polarizers disposed on the outside of said substrates comprising: the edge of at least one of said polarizers constructed so as to extend up to an electrode terminal area for making connection to an external driving circuit.

2. The liquid crystal display of claim 1, further comprising:
an electrode terminal; and
a resin mold formed so that an external circuit connecting material covers said electrically connected edge.

3. The liquid crystal display of claim 1, further comprising a reinforcement plate disposed on the outside of said extended polarizer.

4. The liquid crystal display of claim 1, wherein both edges of said pair of polarizers are extended to said electrode terminal region and further comprising a resin mold formed in an opening between an electrode terminal and an edge of one of said polarizers.

5. A liquid crystal display having liquid crystal sandwiched between a pair of substrates that comprise a polarizing film enclosed by a high polymer film comprising:
an electrode terminal for making contact with an external driving circuit; and
a reflector plate, said reflector plate arranged on the back face of one of said substrates and extended to the region of said electrode terminal.

6. The liquid crystal display of claim 1 or 5 wherein said liquid crystal display is incorporated into an electronic calculator.
